(19)

**Europäisches Patentamt**
**European Patent Office**
**Office européen des brevets**

(11)　**EP 4 582 406 A1**

(12)　# EUROPEAN PATENT APPLICATION
published in accordance with Art. 153(4) EPC

(43) Date of publication:
　　**09.07.2025　Bulletin 2025/28**

(21) Application number: **23934705.7**

(22) Date of filing: **23.05.2023**

(51) International Patent Classification (IPC):
　　*C06B 23/00* (2006.01)　　*C06D 5/06* (2006.01)
　　*C06B 29/22* (2006.01)　　*B60R 21/264* (2006.01)

(86) International application number:
　　**PCT/CN2023/095722**

(87) International publication number:
　　**WO 2024/221519 (31.10.2024 Gazette 2024/44)**

(84) Designated Contracting States:
　　**AL AT BE BG CH CY CZ DE DK EE ES FI FR GB**
　　**GR HR HU IE IS IT LI LT LU LV MC ME MK MT NL**
　　**NO PL PT RO RS SE SI SK SM TR**
　　Designated Extension States:
　　**BA**
　　Designated Validation States:
　　**KH MA MD TN**

(30) Priority:　**26.04.2023　CN 202310469015**

(71) Applicant: **Hubei Hangpeng Chemical Power**
　　**Technology Co., Ltd.**
　　**Xiangyang, Hubei 441022 (CN)**

(72) Inventors:
　　• **LUO, Yunqiang**
　　　**Xiangyang, Hubei 441022 (CN)**

　　• **DU, Tao**
　　　**Xiangyang, Hubei 441022 (CN)**
　　• **GUO, Shuai**
　　　**Xiangyang, Hubei 441022 (CN)**
　　• **REN, Xiangning**
　　　**Xiangyang, Hubei 441022 (CN)**
　　• **ZHANG, Jun**
　　　**Xiangyang, Hubei 441022 (CN)**
　　• **ZUO, Tongjiu**
　　　**Xiangyang, Hubei 441022 (CN)**

(74) Representative: **Altmann Stößel Dick**
　　**Patentanwälte PartG mbB**
　　**Theodor-Heuss-Anlage 2**
　　**68165 Mannheim (DE)**

(54)　**GAS-GENERATING AGENT COMPOSITION, GAS-GENERATING AGENT, AND PREPARATION METHOD AND USE**

(57)　The present invention provides a gas-generating agent composition, a gas-generating agent, and a preparation method and the use, and belongs to the technical field of automobile airbags. The gas-generating agent composition comprises the following components, in percentages by mass: 30-70% of guanidine nitrate, 20-60% of basic copper nitrate, 0-10% of basic copper carbonate, 1-10% of ammonium perchlorate and 1-15% of a slag-forming agent, wherein the slag-forming agent comprises a first component and a second component, the first component being selected from aluminum hydroxide, and the second component being selected from at least one of a zirconate and a silicate. A tablet of the gas-generating agent composition provided above can maintain the form before combustion well after combustion, improve the hardness of residues, and avoid the situation whereby the tablet is molten and splashed after combustion to burn an air bag; and the synergistic effect thereof can reduce the combustion pressure index of the formulation, thereby rendering the combustion more stable.

**FIG. 2**

EP 4 582 406 A1

**Description**

**CROSS-REFERENCE TO RELATED APPLICATION**

The present invention claims the priority to the Chinese patent application with the filing No. CN2023104690151 filed with the Chinese Patent Office on April 26, 2023, and entitled "GAS-GENERATING AGENT COMPOSITION, GAS-GENERATING AGENT, PREPARATION METHOD AND USE", the contents of which are incorporated herein by reference in entirety.

**TECHNICAL FIELD**

The present invention relates to the technical field of automobile airbags, and specifically to a gas-generating agent composition, a gas-generating agent, a preparation method and a use.

**BACKGROUND ART**

In order to miniaturize and reduce weight of a gas generator for an automobile airbag, higher requirements are put forward on performances of a gas-generating agent. At present, a gas-generating agent composition has a low combustion temperature, good slag-forming performance, a high gas-producing rate, a high combustion velocity, and a low pressure index, and generates environmentally healthy gas components by combustion, with toxic and harmful substances meeting industry standards of USCAR. These excellent gas-generating agent performances are conducive to weight reduction of the gas generator and optimization of design thereof.

Currently, the prevailing gas-generating agent compositions in the world are guanidine nitrate and basic copper nitrate gas-generating agents, in which guanidine nitrate acts as a main fuel and basic copper nitrate acts as a main oxidizer. Such gas-generating agents generally have a high combustion temperature. Molten copper metal is mainly generated from the basic copper nitrate after combustion, and usually should be filtered and cooled by a multilayered metal filter and left inside the generator. On the one hand, an increase in weight of the metal filter leads to increased cost and increased weight of the generator. On the other hand, even if the multilayered filter is used, not all residues can be filtered, and a few residues may pass through the filter and burn an inflatable bag, and may burn a human body in a more severe case. Common solutions include: (1) adding a slagging agent, which has a good slagging effect, but usually has insufficient hardness or unsuitable particle size to cause severe influences on ignitability and combustion rate of the gas-generating agent; and (2) using a filter with many layers and good compactness, so that the residues are blocked inside the filter by the filter, while this method also increases the weight of the generator and increases the cost.

In view of the above problems, it is necessary to provide a gas-generating agent composition, a gas-generating agent, a preparation method and a use.

**SUMMARY**

The present invention aims at providing a gas-generating agent composition, a gas-generating agent, a preparation method and a use so as to overcome the above defects existing in the prior art.

The present invention solves the technical problems thereof using technical solutions as follows.

The present invention provides a gas-generating agent composition, comprising following components in percentage by mass: 30%-70% of guanidine nitrate, 20%-60% of basic copper nitrate, 0%-10% of basic copper carbonate, 1%-10% of ammonium perchlorate and 1%-15% of a slag-forming agent, wherein the slag-forming agent comprises a first component and a second component, the first component is selected from aluminum hydroxide, and the second component is at least one selected from zirconate and silicate.

The present invention further provides a gas-generating agent, comprising the above gas-generating agent composition, and a release agent, wherein a content of the release agent accounts for 0.05 wt%-1 wt% of a total amount of the gas-generating agent composition.

The present invention further provides a preparation method for the above gas-generating agent, wherein the gas-generating agent is prepared by wet granulation, dry granulation or spray granulation.

The present invention further provides a use of the above gas-generating agent composition or gas-generating agent in a gas generator of an automobile airbag.

The present invention further provides a gas generator, using the above gas-generating agent composition or gas-generating agent.

The present invention has the following beneficial effects.

The present invention provides a gas-generating agent composition, a gas-generating agent, a preparation method and a use. This gas-generating agent composition mainly includes: guanidine nitrate, basic copper nitrate, basic copper carbonate, ammonium perchlorate and a slag-forming agent, where the slag-forming agent is a combination of at least one of zirconate or silicate and aluminum hydroxide. Through a synergistic effect, the gas-generating agent composition tablets, after combustion, can well retain a pre-combustion morphology, thus improving hardness of residues, and avoiding burning of an inflatable bag due to melting and splashing of the residues after combustion of the tablets; and the synergistic effect thereof can reduce a combustion pressure index of formulation, and enable the combustion to be more stable. By adjusting a copper content in basic copper nitrate, the hardness of the residues is improved, morphology of the residues is sturdier, and the morphology is better retained. Moreover, the gas-generating agent composition has excellent combustion stability and ideal high gas output. Besides, such gas-generating agent composition can improve weight and design of the gas generator, so that the generator has a lighter weight and a smaller volume. This gas-generating agent composition is mainly used for a gas generator of an automobile airbag.

**BRIEF DESCRIPTION OF DRAWINGS**

In order to more clearly illustrate technical solutions of embodiments of the present invention, the drawings which need to be used in the embodiments will be briefly introduced below. It should be understood that the drawings merely show some embodiments of the present invention, and thus should not be construed as limitation to the scope. Those ordinarily skilled in the art still could obtain other relevant drawings according to these drawings, without using any inventive efforts.

FIG. 1 shows scanning electron micrographs of aluminum hydroxide, where a is a scanning electron micrograph of aluminum hydroxide used in examples, and b is a scanning electron micrograph of aluminum hydroxide used in Comparative Example 6;

FIG. 2 shows morphological views of gas-generating agent composition tablets in Example 1 after combustion, where left view shows tablet residues, a middle view shows a filter, and right view shows an aluminum foil;

FIG. 3 shows morphological views of gas-generating agent composition tablets in Example 2 after combustion, where left view shows tablet residues, a middle view shows a filter, and right view shows an aluminum foil;

FIG. 4 shows morphological views of gas-generating agent composition tablets in Example 3 after combustion, where left view shows tablet residues, a middle view shows a filter, and right view shows an aluminum foil;

FIG. 5 shows morphological views of gas-generating agent composition tablets in Example 4 after combustion, where left view shows tablet residues, a middle view shows a filter, and right view shows an aluminum foil;

FIG. 6 shows morphological views of gas-generating agent composition tablets in Example 5 after combustion, where left view shows tablet residues, a middle view shows a filter, and right view shows an aluminum foil;

FIG. 7 shows morphological views of gas-generating agent composition tablets in Example 6 after combustion, where left view shows tablet residues, a middle view shows a filter, and right view shows an aluminum foil;

FIG. 8 shows morphological views of gas-generating agent composition tablets in Example 7 after combustion, where left view shows tablet residues, a middle view shows a filter, and right view shows an aluminum foil;

FIG. 9 shows morphological views of gas-generating agent composition tablets in Comparative Example 1 after combustion, where left view shows tablet residues, a middle view shows a filter, and right view shows an aluminum foil;

FIG. 10 shows morphological views of gas-generating agent composition tablets in Comparative Example 2 after combustion, where left view shows tablet residues, a middle view shows a filter, and right view shows an aluminum foil;

FIG. 11 shows morphological views of gas-generating agent composition tablets in Comparative Example 3 after combustion, where left view shows tablet residues, a middle view shows a filter, and right view shows an aluminum foil;

FIG. 12 shows morphological views of gas-generating agent composition tablets in Comparative Example 4 after combustion, where left view shows tablet residues, a middle view shows a filter, and right view shows an aluminum foil;

FIG. 13 shows morphological views of gas-generating agent composition tablets in Comparative Example 5 after combustion, where left view shows tablet residues, a middle view shows a filter, and right view shows an aluminum foil;

FIG. 14 shows morphological views of gas-generating agent composition tablets in Comparative Example 6 after combustion, where left view shows tablet residues, a middle view shows a filter, and right view shows an aluminum foil;

FIG. 15 shows morphological views of gas-generating agent composition tablets in Comparative Example 7 after combustion, where left view shows tablet residues, a middle view shows a filter, and right view shows an aluminum foil; and

FIG. 16 shows morphological views of gas-generating agent composition tablets in Comparative Example 8 after combustion, where left view shows tablet residues, a middle view shows a filter, and right view shows an aluminum foil.

**DETAILED DESCRIPTION OF EMBODIMENTS**

In order to make objectives, technical solutions and advantages of embodiments of the present invention clearer, technical solutions in the embodiments of the present invention will be described clearly and completely below. Examples, for which no specific conditions are specified, are performed according to conventional conditions or conditions recommended by the manufactures. Where manufacturers of reagents or instruments used are not specified, they are conventional products commercially available.

A gas-generating agent composition, a gas-generating agent, a preparation method and a use provided in embodiments of the present invention will be described in detail below.

Embodiments of the present invention provide a gas-generating agent composition, including following components in percentage by mass: 30%-70% of guanidine nitrate, 20%-60% of basic copper nitrate, 0%-10% of basic copper carbonate, 1%-10% of ammonium perchlorate and 1%-15% of a slag-forming agent, where the slag-forming agent includes a first component and a second component, the first component is selected from aluminum hydroxide, and the second component is at least one selected from zirconate and silicate.

Embodiments of the present invention provide a gas-generating agent composition, mainly including guanidine nitrate, basic copper nitrate, basic copper carbonate, ammonium perchlorate and a slag-forming agent, where the slag-forming agent includes a first component and a second component, the first component is selected from aluminum hydroxide, and the second component is at least one selected from zirconate and silicate. The first component and the second component act together as the slag-forming agent and have a slag-forming performance superior to that of using aluminum hydroxide, zirconate or silicate alone, because when the gas-generating agent is combusted, as aluminum hydroxide is decomposed to absorb heat, a combustion temperature of a gas-producing agent rises slowly, an initial combustion temperature is low, the basic copper nitrate burns to generate a CuO skeleton, and copper droplets will not be generated in an early stage of combustion. When aluminum hydroxide is completely decomposed, the combustion temperature of the gas-producing agent rises sharply, a large amount of copper droplets are generated, and meanwhile, an oxide generated by the decomposition of aluminum hydroxide expands in volume and forms a viscous porous active material. However, zirconate or silicate retains an original stable powdery solid structure under a high-temperature condition, and plays a role of dispersing the large amount of copper droplets generated due to a very small particle size thereof, to form fine copper liquid particles, and increase viscosity of the copper droplets. The fine copper droplets are attached to the oxide of molten aluminum hydroxide under the effect of zirconate or silicate, and are trapped in the combusted agent by Cu skeleton, so as to form bulky residues in a certain tablet shape. Aluminum hydroxide used alone will cause generation of a large number of large droplet copper particles which are not easily attached to the Cu skeleton. When aluminum hydroxide and zirconate or silicate are used in combination, dispersing effect produced is slightly lower than that of using the three in combination, because zirconate and silicate have an effect of mutually promoting dispersion, and thus a synergistic effect therebetween is critical to good slag formation.

Meanwhile, the first component and the second component can also act as a pressure regulator to regulate the combustion rate. When the first component and the second component are used in combination, the combustion rate is remarkably increased. Aluminum hydroxide, zirconate and silicate compositions can improve an ignition performance under a low pressure, indicating that addition of zirconate or silicate has a certain effect of reducing a pressure index. When the first component and the second component are used in combination, it is also advantageous for reducing generation of toxic and harmful gases, because when the first component and the second component are used in combination, zirconate or silicate melts to absorb heat, which plays a role of partially reducing the combustion temperature, and as the combustion temperature thereof is low, no excessive toxic gases such as $NO_x$ are generated. When zirconate, silicate and aluminum hydroxide are simultaneously used, a proportion of the fuel in formulation is reduced, thus reducing a proportion of generated toxic gases such as nitrogen oxides or CO, and enabling the formulation to be greener and more environmentally friendly.

In optional embodiments, the slag-forming agent is a mixture of zirconate and aluminum hydroxide in a mass ratio of 0.1-10:1-20, optionally 0.5-5: 1-10.

In optional embodiments, the slag-forming agent is a mixture of silicate and aluminum hydroxide in a mass ratio of 0. 1-10: 1-20, optionally 0.5-5: 1-10.

In optional embodiments, the slag-forming agent is a mixture of silicate, zirconate and aluminum hydroxide in a mass ratio of 0.1-10:0.1-10:1-20, optionally 0.5-5:0.5-5: 1-10.

In optional embodiments, aluminum hydroxide has a particle size D50 of 75 μm-145 μm. A too fine particle size of aluminum hydroxide will cause tablet residues not to be lumpy, and a too coarse particle size will affect ignitability of tablets.

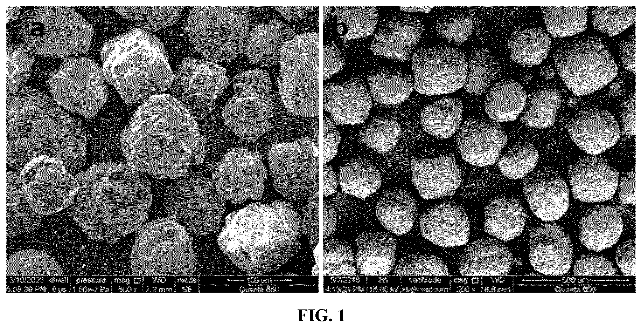

Optionally, aluminum hydroxide is morphologically a sphere, and a surface of the sphere is of a stacked lamellar structure. A scanning electron micrograph of aluminum hydroxide is shown in a of FIG. 1, where it can be seen that aluminum hydroxide is morphologically a sphere, and a surface of the sphere is in an irregular shape, so that combustion surfaces are increased, which facilitates melting and bonding with a metal oxide, and enables residues to be sturdier; and b in FIG. 1 is a scanning electron micrograph of aluminum hydroxide common on the market, and as a surface thereof is in a regularly spherical shape, a combustion surface is small, thus causing the combustion to be relatively slow and residues to be more loose.

In optional embodiments, a particle size D50 of zirconate is 1 μm-10 μm.

Optionally, zirconate includes at least one of barium zirconate, strontium zirconate, magnesium zirconate and calcium zirconate.

In optional embodiments, a particle size D50 of silicate is 1 $\mu$m-10 $\mu$m.

Optionally, silicate includes at least one of zirconium silicate, barium silicate, aluminum silicate and calcium silicate.

In optional embodiments, a particle size D50 of basic copper nitrate is 1.2 $\mu$m-7.8 $\mu$m, and a particle size D50 of basic copper carbonate is 0.8 $\mu$m-7.5 $\mu$m.

In optional embodiments, a sum of water contents in various components of the gas-generating agent composition is not greater than 1% of a total mass of various components.

In optional embodiments, the gas-generating agent composition is formed into a circular sheet structure or an annular sheet structure, where the circular sheet structure has a diameter of 3 mm-15 mm; and the annular sheet structure has an inside diameter of 1 mm-3 mm and an outside diameter of 4 mm-15 mm.

It is worth noting that the gas-generating agent composition of the present invention can further include a known gas-producing composition additive, such as a burning catalyst, a heat absorbent, a slagging flux, and a lubricant. Examples of known additives include metal oxides such as copper oxide, iron oxide, zinc oxide, cobalt oxide, manganese oxide, molybdenum oxide, nickel oxide, bismuth oxide, silicon dioxide and aluminum oxide; metal hydroxides such as aluminum hydroxide, cobalt hydroxide, ferric hydroxide, and magnesium hydroxide; metal carbonates or basic metal carbonates such as cobalt carbonate, calcium carbonate, and basic zinc carbonate; oxalates such as calcium oxalate, copper oxalate, magnesium oxalate, iron oxalate, zinc oxalate, and cobalt oxalate; complexes of metal oxides or hydroxides such as clay, kaolin, talc, bentonite, diatomite, and hydrotalcite; metallates such as ammonium dihydrogen phosphate, ammonium polyphosphate, sodium silicate, mica molybdate, cobalt molybdate, and ammonium molybdate; and organosilicone, molybdenum disulfide, calcium stearate, magnesium stearate, boron nitride, silicon nitride, silicon carbide, boric acid, metaboric acid, anhydrous boric acid, talc, etc.

Embodiments of the present invention provide a gas-generating agent, including the above gas-generating agent composition and a release agent, where a content of the release agent accounts for 0.05 wt%-1 wt% of a total amount of the gas-generating agent composition. It is worth noting that the release agent includes, but is not limited to, graphite, fumed silicon dioxide, talc and magnesium stearate.

In optional embodiments, CO, NO$_x$ and NH$_3$ generated by the gas-generating agent after combustion meet requirements of USCAR; and the gas-generating agent has a combustion rate $\geq$15.0 mm/sec, a combustion pressure index $\leq$0.3, and the highest flame temperature Tc $\leq$1,800 K.

Optionally, the gas-generating agent has the combustion rate $\geq$16.0 mm/sec, the combustion pressure index $\leq$0.28, and the highest flame temperature Tc $\leq$1,700 K.

Embodiments of the present invention provide a preparation method for the above gas-generating agent, where the gas-generating agent is prepared by any one of wet granulation, dry granulation or spray granulation.

In optional embodiments, the gas-generating agent is prepared by the wet granulation, including steps of:

mixing guanidine nitrate, basic copper nitrate, basic copper carbonate, ammonium perchlorate and a slag-forming agent uniformly in proportion, so as to render a first material;
performing wet mixing on the first material by adding water, so as to render a second material;
sieving the second material, so as to render a third material;
drying the third material, and sieving again, so as to render a fourth material; and
mixing the fourth material with a release agent to perform material molding, so as to render a finished product.

Optionally, guanidine nitrate, basic copper nitrate, basic copper carbonate, ammonium perchlorate and the slag-forming agent are mixed in proportion in a wet mixing device for 5 min or more, so as to render the first material, where the wet mixing device is a kneader or a mixer.

Optionally, into the first material, water accounting for 9%-12% of a total mass of the first material is added, and the wet mixing is performed for 20 min-60 min, so as to render the second material.

Optionally, the second material is made to pass through a screen in 10 meshes to 40 meshes, so as to render the third material.

Optionally, the third material is dried at 100 °C-120 °C until water content is less than 0.5% of a total mass of the third material, and is made to pass through the screen in 10 meshes to 40 meshes again, so as to render the fourth material.

Optionally, the release agent is added into the fourth material to perform the material molding, and a circular sheet structure or an annular sheet structure is obtained by the material molding, where the circular sheet structure has a diameter of 3 mm-15 mm; and the annular sheet structure has an inside diameter of 1 mm-3 mm and an outside diameter of 4 mm-15 mm.

In optional embodiments, the gas-generating agent is prepared by the dry granulation, including steps of:

mixing guanidine nitrate, basic copper nitrate, basic copper carbonate, ammonium perchlorate and a slag-forming agent uniformly in proportion, so as to render a first material;
performing dry granulation on the first material, so as to render a second material;
sieving the second material, so as to render a third material; and
mixing the third material with a release agent to perform material molding, so as to render a finished product.

Optionally, guanidine nitrate, basic copper nitrate, basic copper carbonate, ammonium perchlorate and the slag-forming agent are mixed in proportion in a dry mixing device for 8-20 min, so as to render the first material, where the dry mixing device is a pneumatic mixer.

Optionally, a bulk density of granules prepared by the dry granulation is greater than 0.7 g/cm$^3$, more preferably greater than 0.8 g/cm$^3$; and a device for the dry granulation is a dry granulator.

Optionally, the second material is made to pass through a screen in 10 meshes to 40 meshes, so as to render the third material.

Optionally, the release agent is added into the third material to perform the material molding, and a circular sheet structure or an annular sheet structure is obtained by the material molding, where the circular sheet structure has a diameter of 3 mm-15 mm; and the annular sheet structure has an inside diameter of 1 mm-3 mm and an outside diameter of 4 mm-15 mm.

Embodiments of the present invention further provide a use of the gas-generating agent composition or the gas-generating agent in the above, where the gas-generating agent composition or the gas-generating agent is used for a gas generator of an automobile airbag.

Embodiments of the present invention further provide a gas generator, using the gas-generating agent composition or the gas-generating agent in the above.

The features and performances of the present invention will be described in detail below in conjunction with embodiments.

I. Description of test methods

(1) Calculation of gas output amount, combustion temperature, outlet temperature, and oxygen balance

The gas output amount, the combustion temperature, and the outlet temperature were calculated by simulation using certain software, and the oxygen balance of the gas-generating agent composition was calculated using a calculation method for oxygen balance.

(2) Test method for combustion rate and test method for combustion rate pressure index

A static combustion rate was tested according to military standard No. GJB770B, named "Test method of propellant", method 706.1 combustion rate.

The combustion rate was calculated by a formula as follows:

$$U_i = \frac{L_i}{t_i}$$

$U_i$-numerical value of combustion rate of an ith specimen, in mm/s;
$L_i$-effective length or target line spacing value of the ith specimen, in mm;
$t_i$-numerical value of time required to burn off the length $L_i$ of the ith specimen, in s.

Calculation of pressure index:
At a certain temperature, when the combustion rate had linear relationship with logarithm of the pressure within a measured pressure range, calculation was made using virial empirical formula as follows:

$$u = bp^n$$

u-numerical value of combustion rate, in mm/s
b-numerical value of constant term, in mm/s·(MPa)$^n$
p-numerical value of test pressure, in MPa

$$u = bP^n \cdots\cdots\cdots\cdots\cdots$$

$$n = \frac{m\sum_{i=1}^{m}(\ln P_i \ln u_i) - \sum_{i=1}^{m}\ln P_i \sum_{i=1}^{m}\ln u_i}{m\sum_{i=1}^{m}(\ln P_i)^2 - (\sum_{i=1}^{m}\ln P_i)^2} \cdots\cdots$$

$$b = \ln^{-1}\left(\frac{1}{m}\sum_{i=1}^{m}\ln u_i - \frac{n}{m}\sum_{i=1}^{m}\ln P_i\right) \cdots\cdots\cdots$$

n-pressure index;
m-times of effective tests for combustion rate of specimen;
$P_i$-numerical value of test pressure of the ith specimen, in MPa;
$u_i$-numerical value of combustion rate of the ith specimen, in mm/s.

(3) Test method for CCC (closed bomb)

A closed bomb with specification of 200 ml was used. 25.00±0.3 g of the gas-generating agent and 2.00±0.05 g of B/KN were weighed, placed together in the closed bomb and then sealed with a cap, and placed in an incubator at 23±2 °C for 4 h. The test can be performed after heat preservation time is enough.

(4) Test method for gas components

Device name: Fourier infrared gas analyzer
Manufacturer: Protea, UK
Device model: AtmosFIRt
Functional use: for detection and analysis of gas components and concentration

In step 1, an inner wall of a test chamber was cleaned to ensure the test chamber to be clean inside without greasy dirt, a sealing effect at an opening was checked, and a valve was closed.
In step 2, all detection devices were preheated and connected to gas pipes.
In step 3, a height position of an airbag tooling was determined, and the tooling was fixed with a bolt.
In step 4, an airbag module with the generator (already installed was harness) was mounted on an experimental tooling.
In step 5, the harness was connected to an extension wire, an experimental cabin door was closed, and all fasteners were fastened.
In step 6, a gate was closed, a conductor was connected to an external power supply, the external power supply was started, to detonate the generator, and the power supply was disconnected, to wait for collecting and testing gas samples.
In step 7, a sampling valve was opened, and a detection device was started, to test contents of various gases.

II. Examples and Comparative Examples

Abbreviations

Basic copper nitrate: BCN, guanidine nitrate: GN, ammonium perchlorate: AP, basic copper carbonate: BCC, and oxygen balance: OB.
The gas-generating agents provided in the examples and comparative examples of the present invention were mainly prepared by two preparation methods: wet granulation and dry granulation. Herein, a wet preparation process specifically included following steps:

(1) mixing dry powders of raw material components at least including a fuel and an oxidizer, so as to render a first material, where the mixing was performed in a mixing device for a mixing duration of 15 min, a mixing device can be a V-type mixer, a three-dimensional multidirectional motion mixer, an automatic lifting hopper mixer, a ribbon mixer or an acoustic resonance high-efficiency mixer;

(2) performing wet mixing on the first material by adding water, so as to render a second material, where an amount of water added accounted for $10\pm3\%$ of a total mass of the first material, the wet mixing was performed for a duration of 45 min, a wet mixing device was a kneader or a mixer, such as a horizontal kneader, a vertical kneader, a ribbon mixer or an acoustic resonance high-efficiency mixer;

(3) making the second material pass through a screen of 10-40 meshes, so as to render a third material;

(4) drying the third material, until a water content was less than 0.5% of a total mass of the third material, and making the third material pass through the screen of 10-40 meshes again, so as to render a fourth material, where a drying device can be an electric heating oven, an oil bath oven, a steam oven, a double-cone oven, a vibrating fluidized bed or a vacuum dryer;

(5) compress-molding the fourth material, where a molding device can be a single-punch tablet machine, a rotary tablet press, a powder molding machine or a double screw extruder; and

(6) drying a pre-prepared gas-generating agent, at a drying temperature of $100\pm5$ °C, for a drying duration greater than 8 h, so as to render a finished gas-generating agent, where a water content in the gas-producing agent was not greater than 0.15% of a total weight thereof.

A dry preparation process specifically included following steps:

(1) mixing dry powders of raw material components at least including a fuel and an oxidizer, so as to render a first material, where the mixing was performed in a mixing device for a mixing duration of 15 min, a mixing device can be a V-type mixer, a three-dimensional multidirectional motion mixer, an automatic lifting hopper mixer, a ribbon mixer or an acoustic resonance high-efficiency mixer;

(2) adding the first material into a dry granulation device for granulation, then performing size preparation and particle size sieving for particles, and taking a material of 10-120 meshes, so as to render a second material;

(3) mixing the second material with 0.12% calcium stearate and/or 0.25% graphite added, so as to render a third material, where the mixing was performed in a mixing device for a mixing duration of $20\pm5$ min, a mixing device can be a V-type mixer, a three-dimensional multidirectional motion mixer, an automatic lifting hopper mixer, or an acoustic resonance high-efficiency mixer, and a water content was less than 0.5% of a total mass of the third material; and

(4) compress-molding the third material so as to render a finished gas-generating agent, where a molding device can be a single-punch tablet machine, a rotary tablet press, a powder molding machine or a double screw extruder, and a water content in the gas-generating agent was not greater than 0.15% of a total weight thereof.

Formulations and basic combustion performances of the comparative examples and examples are as shown in TABLE 1 below.

TABLE 1

| | GN % | BCN% | Al(HO)$_3$ | | BCC% | AP% | Barium Zirconate % | Zirconium Silicate% | Combustion Temperature K | Outlet Temperature K | Cu % | OB% |
|---|---|---|---|---|---|---|---|---|---|---|---|---|
| | | | % | D$_{50}$ (μm) | | | | | | | | |
| Comparative Example 1 | 48.0 | 45.5 | 5 | 80 | / | 1.5 | / | / | 1820 | 791 | 24.1 | 1.57 |
| Comparative Example 2 | 48.0 | 45.5 | 5 | 7.5 | / | 1.5 | / | / | 1820 | 791 | 24.1 | 1.57 |
| Comparative Example 3 | 48.0 | 45.5 | 5 | 188 | / | 1.5 | / | / | 1820 | 791 | 24.1 | 1.57 |
| Comparative Example 4 | 52.0 | 42.0 | / | / | / | 2.0 | 4.0 | / | 2125 | 810 | 22.1 | -0.35 |
| Comparative Example 5 | 52.0 | 42.0 | / | / | / | 2.0 | / | 4.0 | 2110 | 803 | 22.1 | -0.35 |
| Comparative Example 6 | 42.0 | 50.0 | 5 | 200 | / | 1.5 | 1.5 | / | 1735 | 780 | 26.5 | 4.49 |
| Comparative Example 7 | 40.0 | 50.0 | 8.3 | 80 | / | 1.5 | 0.1 | 0.1 | 1585 | 717 | 26.5 | 5.02 |
| Comparative Example 8 | 40.0 | 50.0 | 0.1 | 80 | / | 1.5 | 4.2 | 4.2 | 1875 | 795 | 26.5 | 5.02 |
| Example 1 | 42.0 | 50.0 | 5 | 80 | / | 1.5 | 1.5 | / | 1735 | 780 | 26.5 | 4.49 |
| Example 2 | 40.0 | 52.0 | 5 | 90 | / | 1.5 | 1.5 | / | 1649 | 765 | 27.5 | 5.62 |
| Example 3 | 40.0 | 50.0 | 5 | 100 | 2 | 1.5 | 1.5 | / | 1695 | 773 | 27.6 | 5.31 |
| Example 4 | 41.0 | 50.0 | 5 | 110 | / | 2.0 | 2.0 | / | 1729 | 778 | 26.5 | 4.93 |
| Example 5 | 42.0 | 50.0 | 5 | 120 | / | 1.5 | / | 1.5 | 1741 | 782 | 26.5 | 4.49 |
| Example 6 | 40.0 | 52.0 | 5 | 130 | / | 1.5 | / | 1.5 | 1636 | 757 | 27.5 | 5.62 |
| Example 7 | 40.0 | 50.0 | 5 | 140 | / | 1.5 | 2.0 | 1.5 | 1610 | 726 | 26.5 | 5.02 |

Note that Comparative Example 6 used aluminum hydroxide with a regularly spherical surface, and a scanning electron micrograph thereof is shown in (b) of FIG. 1.

Combustion rates, combustion pressure indexes and contents of toxic and harmful gases of the tablets provided in the examples and comparative examples are as shown in TABLE 2 below.

TABLE 2

| Formulation | Combustion Rate | | Pressure Index | Harmful Gas Component (ppm) | | | | | | Suspended Particle (g/cm⁻³) |
|---|---|---|---|---|---|---|---|---|---|---|
| | 35% BPF ($\varphi$5) | Under 15 MPa | | CO | NO | $NO_2$ | $NH_3$ | $Cl_2$ | HCl | |
| uscar | / | / | / | 115 | 18.8 | 1.30 | 12.5 | 0.25 | 1.30 | ≤31.3 |
| Comparative Example 1 | 2.91 | 12.78 | 0.58 | 114 | 15.7 | 1.37 | ND | 1.5 | 0.62 | 29.1 |
| Comparative Example 2 | 2.92 | 12.88 | 0.58 | 111 | 15.9 | 1.34 | ND | 1.5 | 0.58 | 35.2 |
| Comparative Example 3 | 1.88 | 5.20 | 0.58 | 125 | 14.9 | 1.31 | ND | 1.4 | 0.66 | 27.3 |
| Comparative Example 4 | 2.88 | 10.24 | 0.60 | 139 | 15.0 | 1.25 | 5.19 | ND | 0.84 | 42.1 |
| Comparative Example 5 | 2.85 | 10.23 | 0.59 | 138 | 15.1 | 1.23 | 5.13 | ND | 0.84 | 39.8 |
| Comparative Example 6 | 2.80 | 14.05 | 0.31 | 108 | 11.5 | 1.22 | ND | 0.25 | 0.28 | 26.5 |
| Comparative Example 7 | 2.56 | 12.35 | 0.55 | 100 | 11.3 | 1.31 | ND | 0.20 | 0.25 | 25.3 |
| Comparative Example 8 | 3.62 | 19.33 | 0.31 | 73 | 16.7 | 2.01 | ND | 0.22 | 0.28 | 46.9 |
| Example 1 | 3.02 | 16.98 | 0.29 | 94 | 9.3 | 0.79 | ND | 0.24 | 0.29 | 25.3 |
| Example 2 | 3.35 | 17.76 | 0.28 | 92 | 10.1 | 0.72 | ND | 0.17 | 0.23 | 22.5 |
| Example 3 | 3.21 | 17.82 | 0.25 | 99 | 9.6 | 0.83 | ND | 0.16 | 0.23 | 20.3 |
| Example 4 | 3.50 | 18.13 | 0.26 | 88 | 10.5 | 0.85 | ND | 0.19 | 0.24 | 21.4 |
| Example 5 | 3.01 | 16.89 | 0.28 | 92 | 9.3 | 0.80 | ND | 0.18 | 0.28 | 23.5 |
| Example 6 | 3.36 | 17.81 | 0.27 | 86 | 10.2 | 0.73 | ND | 0.16 | 0.23 | 24.3 |
| Example 7 | 3.56 | 18.20 | 0.23 | 81 | 9.2 | 0.68 | ND | 0.15 | 0.22 | 18.3 |

Through combination of TABLE 1 and TABLE 2, it can be seen that values of oxygen balance in the comparative examples are negative values or relatively low positive values. Oxygen balance refers to a residual amount of oxygen expressed in grams when an explosive explodes to generate oxides of carbon and hydrogen. It indicates a degree of difference between an actual explosive content and an amount of oxygen required for complete oxidization of carbon and hydrogen in the explosive. A gas-generating agent with positive oxygen balance, as an oxygen content is redundant, is improved in the ignitability and is not prone to intermittent combustion or flameout, but excessive positive oxygen balance will increase the combustion rate during combustion so as to increase the combustion temperature and a pressure inside a combustion chamber, under which condition, element N is more easily oxidized into $NO_x$. A gas-generating agent with negative oxygen balance, due to the lack of oxygen content, does not have enough oxygen to oxidize the element N after combustion, so that a content of generated $NO_x$ is extremely small. The formulations provided in the examples of the present invention have good ignitability and generate low toxicity gases, the positive oxygen balance facilitates combustion and renders a low combustion temperature; therefore, after combustion, the combustion chamber has a low combustion temperature and a low internal pressure therein, under which condition, the element N is less likely to be oxidized into $NO_x$, and a CO content is extremely small because oxygen is sufficient.

Moreover, an increase in copper content can effectively increase a solid content in the formulation. When the content is low, Cu skeletons formed by combustion of the basic copper carbonate cannot support residues generated after all the tablets are burnt, and the residues are loose in texture. After the generator is detonated, the residues easily splash out of the filter to burn through an inflatable bag. In addition, an increase in copper content can effectively improve hardness of the residues, so that the residues substantially retain the tablet shape, without a phenomenon of burning through the inflatable bag.

Evaluation of combustion effects of the tablets provided in the examples and comparative examples is as shown in TABLE 3 below.

TABLE 3

| | Residues retain tablet shape | Residue hardness | Ignitability of tablet under normal pressure | Filter is clean | Aluminum foil is intact | Residual amount of glass fiber mat |
|---|---|---|---|---|---|---|
| Comparative Example 1 | ○ | ○ | ◎ | ○ | × | × |
| Comparative Example 2 | × | × | ○ | × | × | × |
| Comparative Example 3 | ○ | ○ | × | ○ | × | × |
| Comparative Example 4 | ○ | × | ◎ | ○ | × | × |
| Comparative Example 5 | ○ | × | ◎ | ○ | × | × |
| Comparative Example 6 | ○ | × | ○ | ○ | ○ | ○ |
| Comparative Example 7 | ○ | × | ○ | ◎ | ◎ | ◎ |
| Comparative Example 8 | × | × | ○ | × | × | × |
| Example 1 | ◎ | ◎ | ◎ | ◎ | ◎ | ◎ |
| Example 2 | ◎ | ◎ | ◎ | ◎ | ◎ | ◎ |
| Example 3 | ◎ | ◎ | ◎ | ◎ | ◎ | ◎ |
| Example 4 | ◎ | ◎ | ◎ | ◎ | ◎ | ◎ |
| Example 5 | ◎ | ◎ | ◎ | ◎ | ◎ | ◎ |
| Example 6 | ◎ | ◎ | ◎ | ◎ | ◎ | ◎ |
| Example 7 | ◎ | ◎ | ◎ | ◎ | ◎ | ◎ |
| Note: ◎ very good, ○ normal, × not good | | | | | | |

In Comparative Example 1, Comparative Example 4 and Comparative Example 5, as the single formulation thereof was not added with the slag-forming agent aluminum hydroxide and zirconate or silicate, the combustion temperature was too high or the residues were not morphologically large or lumpy, causing that the residues ran over to the outside of the filter and the aluminum foil was burnt through. In Comparative Example 4 and Comparative Example 5, as the copper content was low, the residue hardness was low. In Comparative Examples 1-3, as the particle sizes of aluminum hydroxide were different, residue effects were also different, where in Comparative Example 2, as the particle size was too small, the residues could not retain the tablet shape, and in Comparative Example 3, as the particle size was too large, the combustion rate was too slow. Comparative Example 6 used aluminum hydroxide with the regularly spherical surface common on the market, so that the combustion rate became slow, and the generator performance cannot be satisfied. In Comparative Examples 7 and 8, as the slag-forming agent was out of a defined proportion range, the slag-forming effect was greatly reduced. However, in Examples 1-7 of the present invention, aluminum hydroxide and zirconate or silicate were appropriately added as the slag-forming agent, and the proportion of copper content in the formulation was increased, so that the slag-forming effect was greatly improved, and an expected slag-forming effect was achieved.

After combustion of the tablets provided in the examples and comparative examples, the hardness of tablet residues were tested as shown in TABLE 4 below.

TABLE 4

|  | Lateral Compressive Strength, N | Residue Intactness |
|---|---|---|
| Comparative Example 1 | 5.4 | Good |
| Comparative Example 2 | 0.8 | Bad |
| Comparative Example 3 | 5.6 | Good |
| Comparative Example 4 | 1.2 | Normal |
| Comparative Example 5 | 2.5 | Normal |
| Comparative Example 6 | 15.20 | Normal |
| Comparative Example 7 | 8.9 | Normal |
| Comparative Example 8 | 0.5 | Bad |
| Example 1 | 19.57 | Excellent |
| Example 2 | 20.65 | Excellent |
| Example 3 | 22.49 | Excellent |
| Example 4 | 20.60 | Excellent |
| Example 5 | 19.68 | Excellent |
| Example 6 | 23.25 | Excellent |
| Example 7 | 22.19 | Excellent |

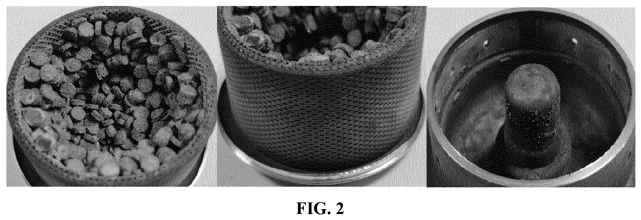

As can be seen from the above TABLE 4, the lateral compressive strength of the tablets made from the gas-generating agent compositions provided in the examples of the present invention is improved by at least 50% or more compared with that in the comparative examples, and the residues have good morphology. In conjunction with the morphological views of the gas-generating agent composition tablets in FIGS. 2-8 after combustion, Examples 1-7 used at least one of silicate and zirconate in combination with aluminum hydroxide, the residue effect after combustion is better, the hardness of the residues is also good (see left view), and the filter is clean on the outside, indicating less splashing of the tablets after combustion (see middle view), and the aluminum foil is intact (see right view). Specifically:

Example 1

Example 1 adopted a dry granulation process, in which the fuel was guanidine nitrate with a content of 42%, the oxidizer was basic copper nitrate with a content of 50%, the auxiliary oxidizer was ammonium perchlorate with a content of 1.5%; and the slag-forming agent was aluminum hydroxide and barium zirconate with contents of 5% and 1.5%, respectively. As shown in FIG. 2, tablet residues of the gas-generating agent composition obtained after combustion retained an intact tablet shape and had relatively high hardness, a filter was clean on the outside and an aluminum foil was intact, indicating that this gas-generating agent composition formulation is good, and a granulation process is good.

Example 2

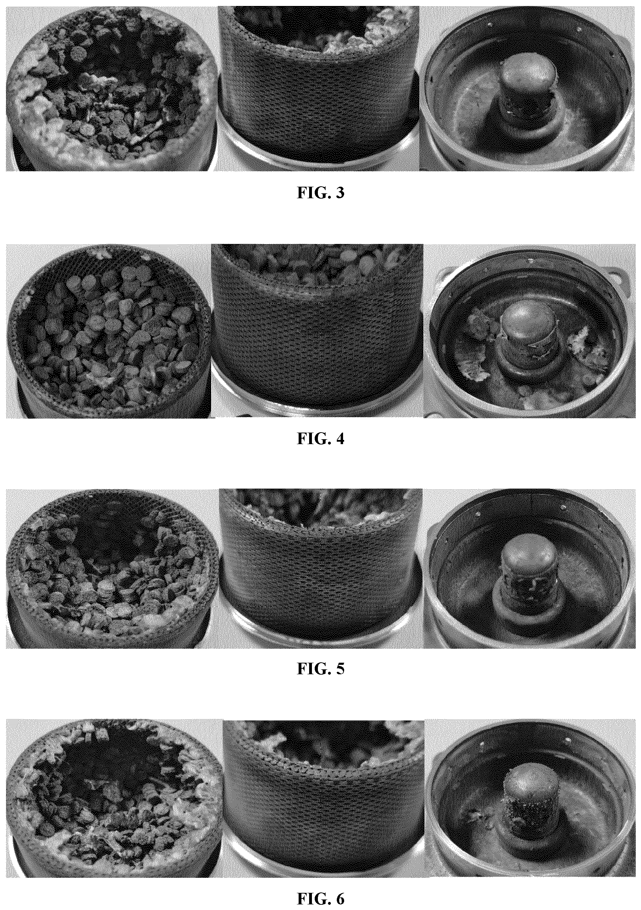

Granulation process steps were the same as those in Example 1, except that a ratio of the fuel to the oxidizer was adjusted, to increase a copper content, so that the hardness of residues of the gas-generating agent composition after the combustion was improved, with the residue effect as shown in FIG. 3, and a proportion of toxic and harmful gases in gas components was reduced.

Example 3

Granulation process steps were the same as those in Example 1, except that BCC was added into the gas-generating agent composition, to further increase a copper content, so that the hardness of residues was further improved, with the residue effect as shown in FIG. 4, and a proportion of toxic and harmful gases in gas components was reduced.

Example 4

Granulation process steps were the same as those in Example 1, except that a content of barium zirconate in 0.5 parts of the gas-generating agent composition was increased, so that the slag-forming effect was relatively improved, as shown in FIG. 5, and suspended particles in gases were reduced.

Example 5

This example used a wet granulation process, and a difference lied in that barium zirconate in the gas-generating agent composition was replaced with zirconium silicate, and the slag-forming effect was equivalent to that in Example 1, as shown in FIG. 6, indicating that both the dry and wet granulation processes are applicable for preparation of the gas-generating agent. Moreover, slag-forming capacities of barium zirconate and zirconium silicate are close.

Example 6

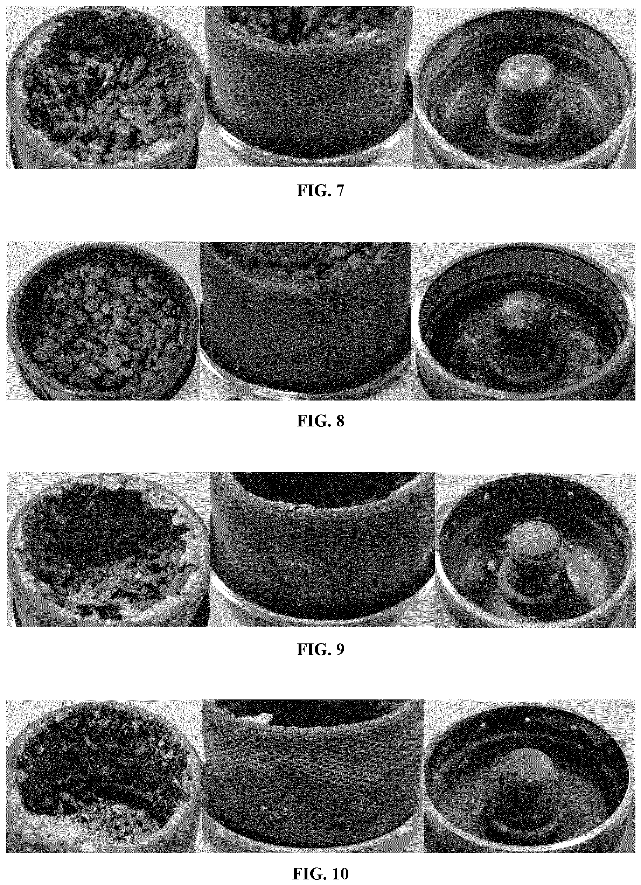

Granulation process steps were the same as those in Example 5, except that a ratio of the fuel to the oxidizer was adjusted, to increase a copper content, so that the hardness of tablet residues of the gas-generating agent composition after the combustion was improved, such that the residues were not prone to run over to the outside of a filter to burn through an inflatable bag, as shown in FIG. 7.

Example 7

Granulation process steps were the same as those in Example 5, except that aluminum hydroxide, barium zirconate and zirconium silicate were added into the slag-forming agent, and a synergistic effect of the three further improved the slag-forming effect. As shown in FIG. 8, the residues retain the tablet shape, the filter was clean on the outside, the aluminum foil was intact, and the residues have high hardness. It is indicated that the gas-generating agent composition formulation is excellent, the slag-forming effect can meet a demand of lightweight development of current gas generators, and gas components and suspended particles satisfy requirements of USCAR, so that it is an internationally competitive formulation.

In Comparative Example 1, only aluminum hydroxide was used as the slag-forming agent. FIG. 9 is a morphological view of the gas-generating agent composition tablets after combustion, where left view shows tablet residues, from which it can be seen that there is a slag-forming effect after combustion of the tablets, but the slag-forming effect is normal as an amount used is small; if the amount is increased, the combustion rate of the gas-generating agent will be affected, there are tablet residues on the filter (see middle view), and the aluminum foil was intact (see right view).

FIG. 10 shows morphological views of the gas-generating agent composition tablets in Comparative Example 2 after combustion, using aluminum hydroxide with a small particle size, and it can be seen that the small particle size causes the residues to be shapeless.

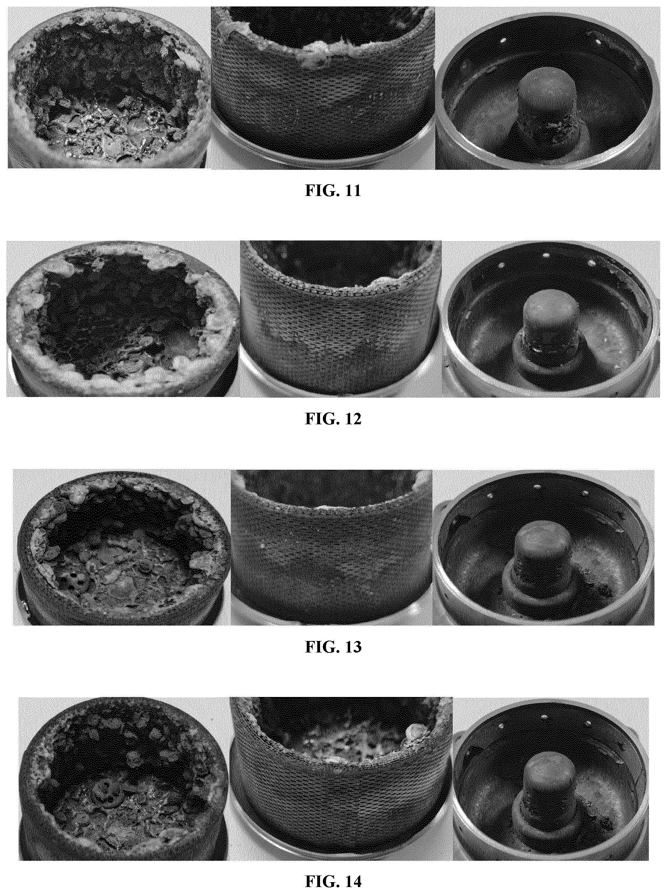

FIG. 11 shows morphological views of the gas-generating agent composition tablets in Comparative Example 3 after combustion, using aluminum hydroxide with a large particle size, and it can be seen that aluminum hydroxide with a large particle size has less effect on the residues retaining the tablet shape.

It can be seen from FIG. 12 and FIG. 13 that in Comparative Example 4 or 5, only zirconate or silicate is used as the slag-forming agent, and only residues of zirconate or silicate are contained after combustion of the tablets, thus there is a slag-forming effect, but slags formed are fragile and easily fly out of the filter towards the airbag (see left view), which is similar to the case after the combustion of the tablets in Comparative Example 1, and there are also tablet residues on the filter (see middle view).

Comparative Example 6 used aluminum hydroxide, zirconate and/or silicate, which are common on the market as the slag-forming agent, with morphological views of the tablets after combustion as shown in FIG. 14, and it can be seen that the slag-forming effect is worse than that in Example 1, because residue conformation thereof is loose due to the slow combustion rate.

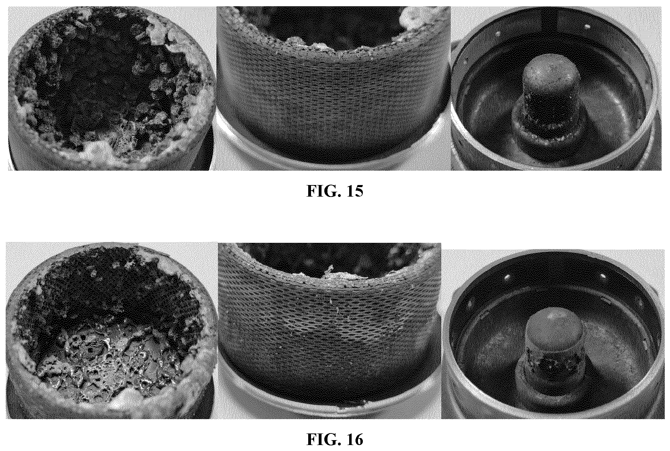

In Comparative Example 7, as contents of barium zirconate and zirconium silicate are too low, large copper droplets cannot be effectively dispersed, so that the droplets cannot be attached to residue skeletons, as shown in FIG. 15. In Comparative Example 8, the residues cannot be shaped as the content of aluminum hydroxide is too low, the temperature is too high and intactness of the aluminum foil is destroyed, and the residues run over to the outside of the filter to destroy the airbag, as shown in FIG. 16.

To sum up, the examples of the present invention provide a gas-generating agent composition, a gas-generating agent, a preparation method and a use. The gas-generating agent composition mainly includes following components in percentage by mass: 30%-70% of guanidine nitrate, 20%-60% of basic copper nitrate, 1%-10% of ammonium perchlorate and 1%-15% of a slag-forming agent. The gas-generating agent can be prepared by wet granulation, dry granulation or spray granulation. Compared with the prior art, the solutions provided in the embodiments of the present invention have following advantages and characteristics.

(1) Regarding the defect in the prior art that a single morphology-retaining agent used in a gas-generating agent composition cannot play a good role of retaining a combustion morphology, through researches and a large number of trials, the inventors propose using aluminum hydroxide, zirconate and/or silicate together as a morphology-retaining agent, meanwhile amounts of the three are provided, and through a synergistic effect thereof, the gas-generating agent tablets, after combustion, can well retain a pre-combustion morphology, and have very high density and hardness, so as to avoid burning of the inflatable bag due to melting and splashing of the combusted tablets. The hardness of residues thereof is improved by at least 50%.

(2) With regard to the high combustion rate pressure index of the gas-generating agent composition in the prior art, synergistic effect of using aluminum hydroxide and zirconium acid or silicate as a pressure-sensitive regulator is provided, and meanwhile the amounts of the three are provided, so that the pressure index is remarkably reduced through the synergistic effect thereof.

(3) A certain amount of perchlorate is used as an ignition-performance regulator, and is used in combination with other components, so as to improve the combustion rate while improving a low-temperature ignition performance of the composition.

(4) Oxygen balance of the formulation is adjusted by different ratios of GN/BCN, such that the gas components CO, NO, $NO_2$, and $NH_3$ after the combustion of the gas-generating agent meet the industry requirements of USCAR, and TANK WASH and suspended particles in gases also meet the industry requirements of USCAR.

(5) Aluminum hydroxide and zirconate or silicate is used as the slag-forming agent, such that the residues of the gas-generating agent after combustion retain the tablet shape, and the residues cannot run over to the outside of the filter, so that the weight of the filter of the gas generator can be remarkably reduced, thereby reducing the weight of the gas generator by at least 50 g to 100 g.

(6) By optimizing and designing content ratios of various components in the gas-generating agent composition, including guanidine nitrate, basic copper nitrate, basic copper carbonate, aluminum hydroxide, ammonium perchlorate, zirconate, and silicate, and verifying through a large number of trials, the gas-generating agent composition is enabled to have excellent performances and remarkable effects, the gas-generating agent tablets, after combustion, can well retain the pre-combustion morphology, and molten copper residues formed after the combustion and decomposition of the basic copper nitrate are remarkably reduced.

(7) Before the molding of the gas-generating agent composition, granulation is performed by means of dry granulation, such that through the dry granulation, the process is simpler, the cost is low, the energy consumption is low, the process is more flexible, and equipment investment is low.

The above-mentioned are only for optional examples of the present invention, and are not used to limit the present invention. For those skilled in the art, various modifications and changes could be made to the present invention. Any modifications, equivalent substitutions, improvements and the like made within the spirit and principle of the present invention should be covered within the scope of protection of the present invention.

**Claims**

1.  A gas-generating agent composition, **characterized by** comprising following components in percentage by mass: 30%-70% of guanidine nitrate, 20%-60% of basic copper nitrate, 0%-10% of basic copper carbonate, 1%-10% of ammonium perchlorate and 1%-15% of a slag-forming agent, wherein the slag-forming agent comprises a first component and a second component, the first component is selected from aluminum hydroxide, and the second component is at least one selected from zirconate and silicate.

2.  The gas-generating agent composition according to claim 1, wherein the slag-forming agent is a mixture of zirconate and aluminum hydroxide in a mass ratio of 0.1-10:1-20, preferably 0.5-5:1-10.

3.  The gas-generating agent composition according to claim 1, wherein the slag-forming agent is a mixture of silicate and aluminum hydroxide in a mass ratio of 0.1-10:1-20, preferably 0.5-5:1-10.

4.  The gas-generating agent composition according to claim 1, wherein the slag-forming agent is a mixture of silicate, zirconate and aluminum hydroxide in a mass ratio of 0.1-10:0.1-10:1-20, preferably 0.5-5:0.5-5:1-10.

5.  The gas-generating agent composition according to claim 1, wherein the aluminum hydroxide has a particle size D50 of 75 $\mu$m-145 $\mu$m; and
preferably, the aluminum hydroxide is morphologically a sphere, and a surface of the sphere is of a stacked lamellar structure.

6. The gas-generating agent composition according to claim 1, wherein a particle size D50 of the zirconate is 1 $\mu$m-10 $\mu$m; and a particle size D50 of the silicate is 1 $\mu$m-10 $\mu$m;

> preferably, the zirconate comprises at least one of barium zirconate, strontium zirconate, magnesium zirconate and calcium zirconate; and
> preferably, the silicate comprises at least one of zirconium silicate, barium silicate, aluminum silicate and calcium silicate.

7. The gas-generating agent composition according to claim 1, wherein a particle size D50 of the basic copper nitrate is 1.2 $\mu$m-7.8 $\mu$m, and a particle size D50 of the basic copper carbonate is 0.8 $\mu$m-7.5 $\mu$m.

8. The gas-generating agent composition according to claim 1, wherein the gas-generating agent composition is formed into a circular sheet structure or an annular sheet structure, wherein the circular sheet structure has a diameter of 3 mm-15 mm; and the annular sheet structure has an inside diameter of 1 mm-3 mm and an outside diameter of 4 mm-15 mm.

9. A gas-generating agent, **characterized by** comprising the gas-generating agent composition according to any one of claims 1-8, and a release agent, wherein a content of the release agent accounts for 0.05 wt%-1 wt% of a total amount of the gas-generating agent composition.

10. The gas-generating agent according to claim 9, wherein CO, $NO_x$ and $NH_3$ generated by the gas-generating agent after combustion meet requirements of USCAR; and the gas-generating agent has a combustion rate $\geq$15.0 mm/sec, a combustion pressure index $\leq$0.3, and the highest flame temperature $\leq$1,800 K; and
preferably, the gas-generating agent has the combustion rate $\geq$16.0 mm/sec, the combustion pressure index $\leq$0.28, and the highest flame temperature $\leq$1,700 K.

11. A preparation method for the gas-generating agent according to any one of claims 9-10, **characterized in that** the gas-generating agent is prepared by wet granulation, dry granulation or spray granulation.

12. The preparation method according to claim 11, wherein preparation of the gas-generating agent by the wet granulation comprises steps of:

> mixing guanidine nitrate, basic copper nitrate, basic copper carbonate, ammonium perchlorate and a slag-forming agent uniformly in proportion, so as to render a first material;
> performing wet mixing on the first material by adding water, so as to render a second material;
> sieving the second material, so as to render a third material;
> drying the third material, and sieving again, so as to render a fourth material; and
> mixing the fourth material with a release agent to perform material molding, so as to render a finished product;
> preferably, guanidine nitrate, basic copper nitrate, basic copper carbonate, ammonium perchlorate and the slag-forming agent are mixed in proportion in a wet mixing device for 5 min or more, so as to render the first material, wherein the wet mixing device is a kneader or a mixer;
> preferably, into the first material, water accounting for 9%-12% of a total mass of the first material is added, and the wet mixing is performed for 20 min-60 min, so as to render the second material;
> preferably, the second material is made to pass through a screen in 10 meshes to 40 meshes, so as to render the third material;
> preferably, the third material is dried at 100 °C-120 °C until water content is less than 0.5% of a total mass of the third material, and is made to pass through the screen in 10 meshes to 40 meshes again, so as to render the fourth material; and
> preferably, the release agent is added into the fourth material to perform the material molding, and a circular sheet structure or an annular sheet structure is obtained by the material molding, wherein the circular sheet structure has a diameter of 3 mm-15 mm; and the annular sheet structure has an inside diameter of 1 mm-3 mm and an outside diameter of 4 mm-15 mm.

13. The preparation method according to claim 11, wherein preparation of the gas-generating agent by the dry granulation comprises steps of:

> mixing guanidine nitrate, basic copper nitrate, basic copper carbonate, ammonium perchlorate and a slag-forming agent uniformly in proportion, so as to render a first material;

performing dry granulation on the first material, so as to render a second material;

sieving the second material, so as to render a third material; and

mixing the third material with a release agent to perform material molding, so as to render a finished product;

preferably, guanidine nitrate, basic copper nitrate, basic copper carbonate, ammonium perchlorate and the slag-forming agent are mixed in proportion in a dry mixing device for 8-20 min, so as to render the first material, wherein the dry mixing device is a pneumatic mixer;

preferably, a bulk density of granules is greater than 0.7 g/cm$^3$, more preferably greater than 0.8 g/cm$^3$; and a device for the dry granulation is a dry granulator;

preferably, the second material is made to pass through a screen in 10 meshes to 40 meshes, so as to render the third material; and

preferably, the release agent is added into the third material to perform the material molding, and a circular sheet structure or an annular sheet structure is obtained by the material molding, wherein the circular sheet structure has a diameter of 3 mm-15 mm; and the annular sheet structure has an inside diameter of 1 mm-3 mm and an outside diameter of 4 mm-15 mm.

14. Use of the gas-generating agent composition according to any one of claims 1-8 or the gas-generating agent according to any one of claims 9-10 in a gas generator of an automobile airbag.

15. A gas generator, **characterized by** using the gas-generating agent composition according to any one of claims 1-8 or the gas-generating agent according to any one of claims 9-10.

**FIG. 1**

**FIG. 2**

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

FIG. 16

国际检索报告

| 国际申请号 |
|---|
| PCT/CN2023/095722 |

| A. | 主题的分类 |
|---|---|

C06B23/00(2006.01)i；C06D5/06(2006.01)i；C06B29/22(2006.01)i；B60R21/264(2006.01)i

按照国际专利分类(IPC)或者同时按照国家分类和IPC两种分类

| B. | 检索领域 |
|---|---|

检索的最低限度文献(标明分类系统和分类号)

IPC:C06B,C06C,C06D,B60R

包含在检索领域中的除最低限度文献以外的检索文献

在国际检索时查阅的电子数据库(数据库的名称，和使用的检索词（如使用）)

CJFD,CNTXT,DWPI,ENTXTC,ISI Web of Science:申请人,发明人,硝酸胍,硝酸亚氨脲,GN,碱式硝酸铜,BCN,高氯酸铵,高氯酸钾,KP,AP,压强指数,产气,成渣剂,硅钙,硅酸,碱式硝酸铜,结渣剂,铝硅酸,气体发生,氢氧化铝,熔融,硝酸胍,氧化铝水合物,造渣剂,渣,锆酸,Al,AlOH,BaSiO3,BaZrO3,BaZrO3,BZO,CaSiO3,Guanidine nitrate?,Carbamimidoyl nitrate?,basic copper nitrate?,ammonium perchlorate,potassium perchlorate,molten,OH,SiAl,silicate,slag,SrZrO,zirconate,ZrSiO4,Si-Al,alumina hydrate,aluminum hydroxide

| C. | 相关文件 |
|---|---|

| 类型* | 引用文件，必要时，指明相关段落 | 相关的权利要求 |
|---|---|---|
| Y | CN 111675589 A (湖北航鹏化学动力科技有限责任公司) 2020年9月18日 (2020 - 09 - 18)<br>参见说明书实施例3,15-47段 | 1-15 |
| Y | CN 108250006 A (湖北航鹏化学动力科技有限责任公司) 2018年7月6日 (2018 - 07 - 06)<br>参见说明书第16-51段 | 1-15 |
| Y | WO 2021227578 A1 (HUBEI HANGPENG CHEMICAL POWER TECH CO LTD) 2021年11月18日 (2021 - 11 - 18)<br>参见说明书第19-62段 | 1-15 |
| X | EP 1415963 A1 (DAICEL CHEM) 2004年5月6日 (2004 - 05 - 06)<br>参见说明书第10-51段，实施例1 | 1,3,7-15 |
| A | CN 101990526 A (大赛璐化学工业株式会社) 2011年3月23日 (2011 - 03 - 23)<br>参见全文 | 1-15 |
| A | CN 105358507 A (有限会社三松) 2016年2月24日 (2016 - 02 - 24)<br>参见全文 | 1-15 |

☑ 其余文件在C栏的续页中列出。　　　　　　　　　☑ 见同族专利附件。

| * 引用文件的具体类型： | "T" 在申请日或优先权日之后公布，与申请不相抵触，但为了理解发明之理论或原理的在后文件 |
|---|---|
| "A" 认为不特别相关的表示了现有技术一般状态的文件 | |
| "D" 申请人在国际申请中引证的文件 | "X" 特别相关的文件，单独考虑该文件，认定要求保护的发明不是新颖的或不具有创造性 |
| "E" 在国际申请日的当天或之后公布的在先申请或专利 | |
| "L" 可能对优先权要求构成怀疑的文件，或为确定另一篇引用文件的公布日而引用的或者因其他特殊理由而引用的文件（如具体说明的） | "Y" 特别相关的文件，当该文件与另一篇或者多篇该类文件结合并且这种结合对于本领域技术人员为显而易见时，要求保护的发明不具有创造性 |
| "O" 涉及口头公开、使用、展览或其他方式公开的文件 | "&" 同族专利的文件 |
| "P" 公布日先于国际申请日但迟于所要求的优先权日的文件 | |

| 国际检索实际完成的日期 | 国际检索报告邮寄日期 |
|---|---|
| 2024年1月18日 | 2024年1月25日 |

| ISA/CN的名称和邮寄地址 | 受权官员 |
|---|---|
| 中国国家知识产权局<br>中国北京市海淀区蓟门桥西土城路6号 100088 | 袁媛 |
| | 电话号码 (+86) 010-62084535 |

PCT/ISA/210 表(第2页) (2022年7月)

| | 国际检索报告 | 国际申请号 |
|---|---|---|
| | | PCT/CN2023/095722 |

| C. | 相关文件 | 24 | |
|---|---|---|---|
| 类 型* | 引用文件，必要时，指明相关段落 | | 相关的权利要求 |
| A | CN 105777459 A (湖北航天化学技术研究所) 2016年7月20日 (2016 – 07 – 20)<br>参见全文 | | 1–15 |
| A | CN 1556782 A (大赛璐化学工业株式会社) 2004年12月22日 (2004 – 12 – 22)<br>参见全文 | | 1–15 |
| A | JP 2004067424 A (DAICEL CHEM) 2004年3月4日 (2004 – 03 – 04)<br>参见全文 | | 1–15 |
| A | JP 2019182729 A (NIPPON KAYAKU KK) 2019年10月24日 (2019 – 10 – 24)<br>参见全文 | | 1–15 |
| A | US 2003145921 A1 (TRW INC) 2003年8月7日 (2003 – 08 – 07)<br>参见全文 | | 1–15 |
| A | US 2004154710 A1 (DAICEL CHEM IND LTD WATABIKI M) 2004年8月12日 (2004 – 08 – 12)<br>参见全文 | | 1–15 |
| A | WO 2004024652 A1 (DAICEL CHEM) 2004年3月25日 (2004 – 03 – 25)<br>参见全文 | | 1–15 |
| A | 石俊涛;王妮;王秋雨;. "安全气囊气体发生剂用碱式硝酸铜的对比研究"<br>化学推进剂与高分子材料, 第01期，2017年1月28日 (2017 – 01 – 28),<br>参见全文 | | 1–15 |

PCT/ISA/210 表(第2页) (2022年7月)

<table>
<tr><td colspan="2">国际检索报告<br>关于同族专利的信息</td><td colspan="2">国际申请号<br>*PCT/CN2023/095722*</td></tr>
</table>

| 检索报告引用的专利文件 | | | 公布日<br>(年/月/日) | 同族专利 | | | 公布日<br>(年/月/日) |
|---|---|---|---|---|---|---|---|
| CN | 111675589 | A | 2020年9月18日 | CN | 111675589 | B | 2021年8月6日 |
| | | | | WO | 2021227577 | A1 | 2021年11月18日 |
| | | | | EP | 3936495 | A1 | 2022年1月12日 |
| | | | | US | 2022009853 | A1 | 2022年1月13日 |
| | | | | EP | 3936495 | A4 | 2022年4月13日 |
| CN | 108250006 | A | 2018年7月6日 | WO | 2019153624 | A1 | 2019年8月15日 |
| | | | | CN | 108250006 | B | 2019年8月9日 |
| WO | 2021227578 | A1 | 2021年11月18日 | CN | 111548242 | A | 2020年8月18日 |
| | | | | CN | 111548242 | B | 2021年9月3日 |
| EP | 1415963 | A1 | 2004年5月6日 | JP | 2005145718 | A | 2005年6月9日 |
| | | | | JP | 4672975 | B2 | 2011年4月20日 |
| | | | | EP | 1415963 | B1 | 2017年3月8日 |
| | | | | US | 2004154712 | A1 | 2004年8月12日 |
| | | | | US | 7618506 | B2 | 2009年11月17日 |
| CN | 101990526 | A | 2011年3月23日 | JP | 2009269813 | A | 2009年11月19日 |
| | | | | JP | 5275862 | B2 | 2013年8月28日 |
| | | | | US | 2011030858 | A1 | 2011年2月10日 |
| | | | | US | 9174888 | B2 | 2015年11月3日 |
| | | | | EP | 2266937 | A1 | 2010年12月29日 |
| | | | | EP | 2266937 | A4 | 2014年1月1日 |
| | | | | EP | 2266937 | B1 | 2015年2月25日 |
| | | | | WO | 2009125587 | A1 | 2009年10月15日 |
| CN | 105358507 | A | 2016年2月24日 | KR | 20140137038 | A | 2014年12月2日 |
| | | | | KR | 101518316 | B1 | 2015年5月11日 |
| | | | | WO | 2014189167 | A1 | 2014年11月27日 |
| | | | | EP | 3000799 | A1 | 2016年3月30日 |
| | | | | EP | 3000799 | A4 | 2017年1月4日 |
| CN | 105777459 | A | 2016年7月20日 | CN | 105777459 | B | 2018年6月19日 |
| CN | 1556782 | A | 2004年12月22日 | EP | 1538137 | A1 | 2005年6月8日 |
| | | | | EP | 1538137 | A4 | 2011年12月21日 |
| | | | | EP | 1538137 | B1 | 2016年11月9日 |
| | | | | AU | 2003262083 | A1 | 2004年4月30日 |
| | | | | JP | 2004155645 | A | 2004年6月3日 |
| | | | | JP | 4302442 | B2 | 2009年7月29日 |
| | | | | WO | 2004024652 | A1 | 2004年3月25日 |
| JP | 2004067424 | A | 2004年3月4日 | JP | 3907548 | B2 | 2007年4月18日 |
| JP | 2019182729 | A | 2019年10月24日 | JP | 6995006 | B2 | 2022年1月14日 |
| US | 2003145921 | A1 | 2003年8月7日 | EP | 1323696 | A2 | 2003年7月2日 |
| | | | | EP | 1323696 | A3 | 2012年5月16日 |
| | | | | US | 6875295 | B2 | 2005年4月5日 |
| US | 2004154710 | A1 | 2004年8月12日 | WO | 2004011398 | A1 | 2004年2月5日 |
| | | | | JP | 2004059331 | A | 2004年2月26日 |
| WO | 2004024652 | A1 | 2004年3月25日 | 无 | | | |

PCT/ISA/210 表(同族专利附件) (2022年7月)

**EP 4 582 406 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2023104690151